# EUROPÄISCHE PATENTANMELDUNG

(11) **EP 0 683 578 A2**
(43) Veröffentlichungstag der Anmeldung: **22.11.1995**
(21) Anmeldenummer: 95107497.0
(22) Anmeldetag: 16.05.1995
(51) Int. Cl.: H04J 3/06, H04B 10/20

(54) **Optisches TDM/TDMA-System mit erhöhtem Reichweitenbereich**

(30) Priorität: 20.05.1994 DE 4417771
(71) Anmelder: SIEMENS AKTIENGESELLSCHAFT, D-80333 München (DE)
(72) Erfinder: Singer, Josef, Dipl. Ing., D-86807 Buchloe (DE)

(57) **Zusammenfassung**

Bei dem oben genannten Systemen ergibt sich das Problem, daß die zu einer Zentrale gesendeten Signalblöcke einen Steuerdatenteil enthalten, dessen Länge sich aus der Signallaufzeit von der Zentrale zu der am weitesten entfernten abgesetzten Einheit ergibt. Eine Reichweitenerhöhung führt dann zu einem längeren Steuerdatenteil und damit zu einer verringerten Übertragungskapazität für Nutzsignale. Erfindungsgemäß werden deshalb die abgesetzten Einheiten in Entfernungsbereiche eingeteilt und außer den von der Zentrale am weitesten entfernten Einheiten die abgesetzten Einheiten jeweils eines Entfernungsbereiches eine zusätzliche weitere Verzögerung enthalten, wobei der Sendezyklus der abgesetzten Einheiten früher beginnt, als der Empfangszyklus.

## Beschreibung

Die Erfindung betrifft ein optisches TDM/TDMA-System entsprechend dem Oberbegriff des Anspruchs 1.

Optische TDM/TDMA-Systeme sind bekannt aus "Optische Übertragungstechnik für flächendeckende Teilnehmeranschlüsse", Heft 04/1992 Abschnitt 5 S.9-12, Heft 09/1992 Abschnitte 9.0und 9.1 S.24-29 und Heft 10/1992 Abschnitte 11.0 auf S.4-6 und "Opal 94" S. 11-13 der Zeitschrift "Der Fernmelde-Ingenieur" (Verlag für Wissenschaft und Leben, Georg Heidecker GmbH, Erlangen) und in den deutschen Patentanmeldungen DE-A1 44 02 826.1 und DE-A1 44 05 461 beschrieben.

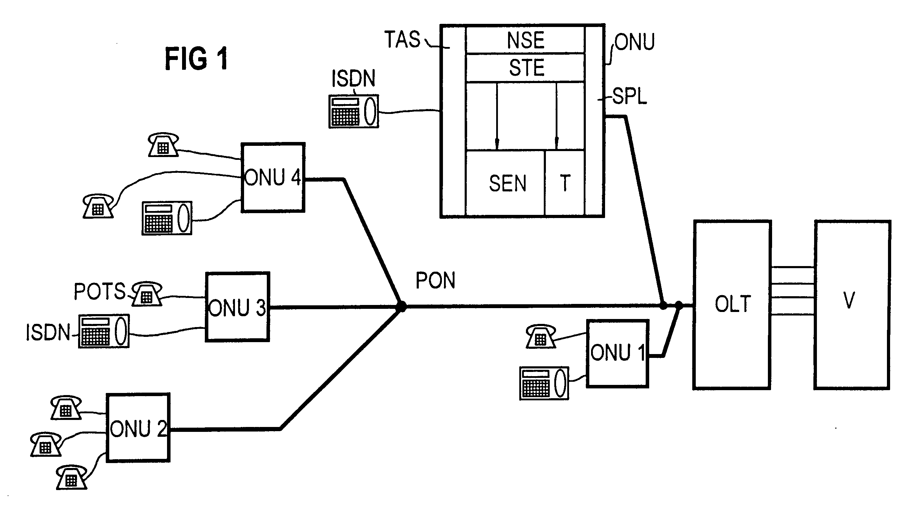

Bei optischen Übertragungssystemen für flächendeckende Teilnehmeranschlüsse wird häufig vom sogenannten TDM/TDMA-Prinzip Gebrauch gemacht. Dabei sendet eine Zentrale in einen festgelegten Zyklus im Zeitmultiplex-(TDM)-Betrieb Nachrichten- und Steuersignale über ein passives optisches Netzwerk, das sich, wie auch aus Figur 1 erkennbar, in Form einer Lichtwellenleiter-Baumstruktur in Richtung von der Zentrale OLT zu teilnehmernahen abgesetzten Einheiten ONU aufspaltet. In der Gegenrichtung senden diese abgesetzten Einheiten im Zeitmultiplex-Vielfachzugriff (TDMA-Time Division Multiple Access), also periodisch in einer vorgewählten Reihenfolge in bestimmten Zeitschlitzen Zeitmultiplexsignale enthaltende Signalbursts mit dem gleichen Zyklus an die Zentrale zurück. Dabei können für die Übertragung der von der Zentrale stammenden Signale und für die Gegenrichtung getrennte Lichtwellenleiter-Baumstrukturen verwendet werden, im Hinblick auf eine Aufwandsverringerung wird aber häufig im Vollduplexbetrieb mit Wellenlängenmultiplex mit nur einer auch als "Passives Optisches Netz (PON)" bezeichneten Lichtwellenleiter-Baumstruktur gearbeitet. Die abgesetzten Einheiten senden gegenüber dem Empfangszeitpunkt der TDM-Signale jeweils zeitlich versetzt ihre Signalbursts mit einem für jede abgesetzte Einheit individuell ermittelten Verzögerungswert an die Zentrale zurück. Der Verzögerungswert wird dabei für jede abgesetzte Einheit so gewählt, daß die Signalbursts aller abgesetzten Einheiten nach Durchlaufen der unterschiedlichen Faserlängen bis zur Zentrale dort überlappungsfrei und rahmensynchron eintreffen. Die Steuerung und Auslösung der Verzögerung erfolgt dabei von der Zentrale durch innerhalb der Zeitmultiplexsignale mitübermittelte Steuersignale.

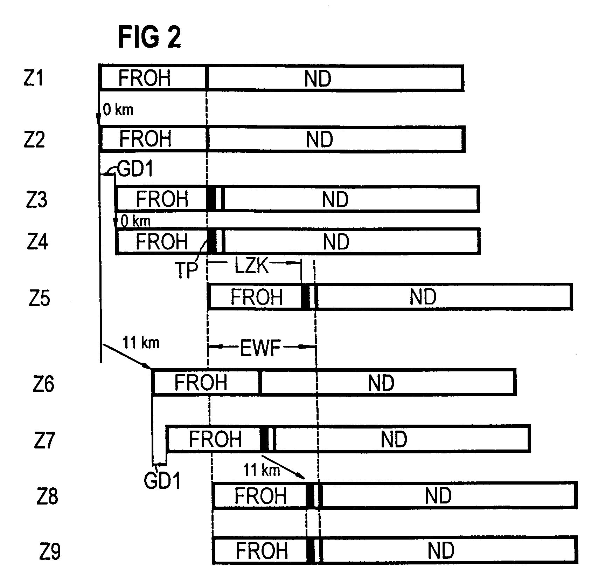

Für die Signalübertragung wird in bekannter Weise ein Rahmenformat gewählt, das für beide Übertragungsrichtungen prinzipiell gleich aufgebaut ist und das aus einer Vielzahl von aufeinanderfolgenden Signalblöcken besteht. Ein einzelner Signalblock ist in Figur 2, Zeile 1 dargestellt. Der Signalblock enthält einen mit der Adresse der angesprochenen abgesetzten Einheit versehenen Steuerdatenteil, der auch als Frame Overhead (FROH) bezeichnet wird, an den sich ein vergleichsweise wesentlich längerer Nutzdatenteil ND anschließt. Im Steuerdatenteil (FROH) können von der Zentrale aus Steuerkommandos an die einzelnen abgesetzten Einheiten gesendet werden. Wahrend des Einmeßvorganges und zur Überprüfung der Laufzeit im Betrieb werden dort von den abgesetzten Einheiten sogenannte Testpaket-Signale gesendet, die eine Synchronisiersequenz zur Laufzeitmessung enthalten. Von der abgesetzten Einheit zur Zentrale können im Steuerdatenteil die Quittungssignale für die Steuerkommandos der Zentrale und auch Statusinformationen der abgesetzten Einheit übertragen werden.

Im Nutzdatenteil werden von der Zentrale die Nutzdaten für die jeweilige abgesetzte Einheit und in entgegengesetzter Richtung die Nutzdaten dieser abgesetzten Einheit für die Zentrale übertragen. Die Übertragung von Steuerdaten verringert also die Übertragung von Nutzdaten, so daß versucht wird, den Steuerdatenteil FROH der Signalblöcke möglichst klein zu halten. Nun dient aber dieser Steuerdatenteil auch zur Übertragung der Testpaket-Signale bei der periodisch erfolgenden Einmessung eines derartigen TDM/TDMA-Systems, so daß der Steuerdatenteil - wie anschließend erläutert - nicht beliebig verkürzt werden kann.

Zur Erläuterung wird der Einmeßvorgang zweier abgesetzter Einheiten ONU1, ONU5 der Figur 1 betrachtet, die in unterschiedlichen Entfernungen von der Zentrale angeordnet sind. Im ersten Fall wird davon ausgegangen, daß die abgesetzte Einheit ONU1 der Zentrale unmittelbar benachbart ist, so daß ein von der Zentrale OLT entsprechend Zeile 1 ausgesendeter Signalblock nach vernachlässigbarer Laufzeit entsprechend Zeile 2 in der abgesetzten Einheit ONU1 eintrifft. Die Reaktionszeit auf Befehle der Zentrale ist durch zusätzliche Verzögerungsglieder für alle abgesetzten Einheiten auf eine erste Grundverzögerung GD1 gleich eingestellt, so daß die abgesetzte Einheit auf einen Befehl der Zentrale nach dieser Grundverzögerung einen Signalblock entsprechend Zeile 3 erzeugt, der zur Laufzeitmessung für den Einmeßvorgang ein Testpaket aus Meßsignalen enthält, die am Ende des Steuerdatenteils angeordnet sind. Dieser Signalblock wird an die Zentrale OLT zurückgesendet und trifft dort entsprechend Zeile 4 nach vernachlässigbarer Laufzeit ein.

In der Zentrale ist ein Erwartungsfenster EWF vorgesehen, dessen Länge der Länge des Steuerdatenteils FROH der Signalblöcke entspricht und das mit dem Ende der Aussendung des Steuerdatenteils durch die Zentrale beginnt. In diesem Erwartungsfenster müssen wahrend des Einmeßvorganges und beim periodischen Nachmessen die Testpakete eintreffen. Der Beginn des Erwartungsfensters für die Testpakete ergibt sich also aus der minimalen Signallaufzeit zwischen Zentrale und nächster abgesetzter Einheit ONU zuzüglich der eingestellten ersten Grundverzögerung GD1 . In der der Zentrale OLT unmittelbar benachbarten ersten abgesetzten Einheit ONU1 ist also zur Ergänzung der Signallaufzeit auf der Glasfaser eine Laufzeitkorrektur LZK vorzusehen, damit der Signalblock dieser abgesetzten Einheit in der Soll-Lage entsprechend Zeile 5 in der Zentrale eintrifft.

In der Zeile 6 ist ein Signalblock dargestellt, der nach maximaler Signallaufzeit entsprechend der in maximaler Entfernung von der Zentrale angeordneten abgesetzten Einheit ONU5 eintrifft. Nach der ersten Grundverzögerung GD1 wird ein Signalblock entsprechend Zeile 7 von der abgesetzten Einheit ONU5 zur Zentrale zurückgesendet, der entsprechend Zeile 8 mit dem Steuerdatenteil genau im Erwartungsfenster EWF der Zentrale OLT eintrifft. Der Vergleich mit der Soll-Lage entsprechend Zeile 9 für die Signalblöcke zeigt, daß im Gegensatz zur Zeile 5 eine Laufzeitkorrektur nicht erforderlich ist und daß außerdem bei einer noch längeren Laufzeit die Testpakete des Steuerdatenteils nicht mehr im Erwartungsfenster empfangen würden. Eine Verlängerung der Reichweite dieses Systems bedingt also ein größeres Erwartungsfenster bzw. einen längeren Steuerdatenteil der Signalblöcke auf Kosten der Nutzdatenübertragung. Dadurch würde aber die Übertragungskapazität für die Nutzdaten im Gesamtsystem verringert und wegen der dann erforderlichen größeren Pufferspeicher für die Nutzdaten die Datenlaufzeit im System und der Aufwand erhöht.

Eine Erhöhung der Reichweite ist dann leicht möglich, wenn keine der Zentrale unmittelbar benachbarten abgesetzten Einheiten vorhanden sind, also der Reichweitenbereich nicht vergrößert wird. In diesem Fall wurden die Unterschiede in der Entfernung zwischen Zentrale und abgesetzten Einheiten nur zu Unterschieden in der Signallaufzeit führen, die aber keine Erweiterung des Erwartungsfensters der Zentrale bedingen.

Die Aufgabe bei der vorliegenden Erfindung besteht also darin, das eingangs erwähnte TDM/TDMA-System so weiterzubilden, daß sich eine Erhöhung der Reichweite ohne Verringerung der Übertragungskapazität für die Nutzdaten und ohne Erhöhung der Datenlaufzeit ergibt.

Erfindungsgemäß wird die Aufgabe bei einem optischen TDM/TDMA-System der eingangs erwähnten Art dadurch gelöst, daß dies durch die im Kennzeichen des Patentanspruchs 1 aufgeführten Merkmale weitergebildet ist. Das erfindungsgemäße System hat den Vorteil, daß die erzielbare Reichweite auf ein Vielfaches des durch die Länge des Steuerdatenteils der Signalblöcke begrenzten Wertes erweitert werden kann und so die hohen Ausgangsleistungen der inzwischen verfügbaren Sendelaser besser ausgenutzt werden können, bei einer bevorzugten Ausbildung des erfindungsgemäßen Systems entsprechend Patentanspruch 2 ergibt sich eine Verdoppelung der Reichweite.

Die Erfindung soll im folgenden anhand eines in der Zeichnung dargestellten Ausführungsbeispieles naher erläutert werden.

Dabei zeigt:
- Figur 1: ein TDM/TDMA-System mit einem passiven optischen Netzwerk und in unterschiedlichen Entfernungen von der Zentrale OLT angeordneten abgesetzten Einheiten ONU,
- Figur 2: den Einmeßvorgang in einem TDM/TDMA-System nach dem Stande der Technik,
- Figur 3: den Einmeßvorgang in einem ersten Entfernungsbereich und
- Figur 4: den Einmeßvorgang in einem zweiten Entfernungsbereich jeweils für das erfindungsgemäße TDM/TDMA-System.

In der Figur 1 ist an die Ortsvermittlung V die Zentrale OLT des TDM/TDMA-Systems angeschlossen, die neben Steuerungs- und Auswerteeinrichtungen den Lasersender enthält, der die zur Übertragung an die abgesetzten Einheiten ONU1 ... 5 vorgesehenen optischen Signale in das passive optische Netzwerk PON einspeist. Der Zentrale OLT unmittelbar benachbart ist die erste abgesetzte Einheit ONU1 und in etwas weiterer Entfernung die zweite abgesetzte Einheit ONU2 angeordnet, deren Innenschaltung als Beispiel für alle abgesetzten Einheiten dargestellt ist. In größerer Entfernung befinden sich die dritte bis fünfte abgesetzte Einheit ONU3, 4, 5. Die abgesetzten Einheiten sind mit üblichen Telefonen POTS oder Breitbandtelefoneinrichtungen ISDN verbunden, die einzelnen Teilnehmern zugeordnet sind.

Die für alle abgesetzten Einheiten beispielhafte Innenschaltung der zweiten abgesetzten Einheit ONU2 enthält einen an den Glasfasereingang angeschlossenen Strahlteiler SPL, der die ankommenden Lichtimpulse einem lichtelektrischen Wandler zuführt und die abgehenden Lichtimpulse in das passive optische Netzwerk PON einkoppelt. An den lichtelektrischen Wandler sind der Nutzsignalempfänger NSE und der Steuersignalempfänger STE angeschlossen, der Ausgang des Nutzsignalempfängers NSE ist mit einem Teilnehmeranschluß TAS verbunden, der die empfangenen Nutzsignale im vorliegenden Fall an ein ISDN-Telefon abgibt und von diesem erzeugte Signale an den Lasersender SEN weiterleitet. Zwischen Steuersignalempfänger STE und Lasersender SEN besteht eine direkte Steuerverbindung, außerdem ist in den Lasersender SEN ein Verzögerungsglied T eingefügt, das auch von den Nutzdaten durchlaufen wird.. Das Verzögerungsglied T ist durch eine zusätzliche Steuerleitung mit dem Steuersignalempfänger STE verbunden und dadurch in seiner Verzögerung von der Zentrale OLT aus gesteuert umschaltbar.

In Verbindung mit Figur 2 ist einleitend der Einmeßvorgang für ein konventionelles TDM/TDMA-System bereits erläutert.

Beim erfindungsgemäßen TDM/TDMA-System sind die abgesetzten Einheiten ONU in zwei Entfernungsbereiche eingeteilt, wobei sich in einer Entfernung zwischen 0 und 11 km die abgesetzten Einheiten des Entfernungsbereichs 1 und in einer Entfernung von etwa 9 bis etwa 20 km die abgesetzten Einheiten des Entfernungsbereichs 2 befinden.

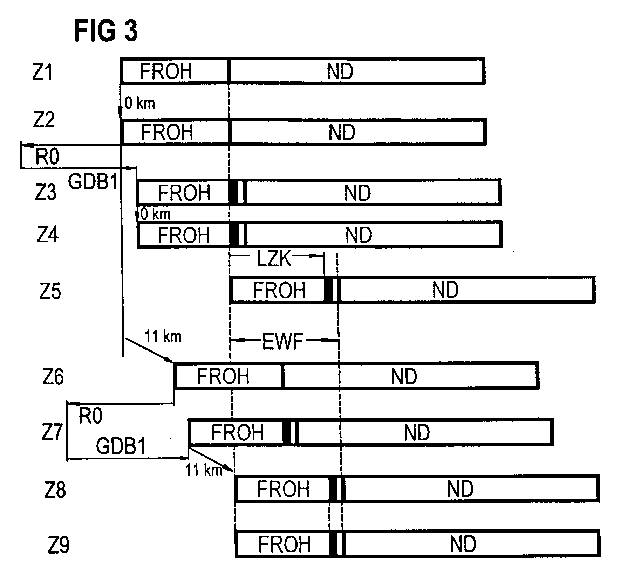

In Verbindung mit Figur 3 soll nun der Einmeßvorgang für eine im Entfernungsbereich 1 befindliche abgesetzte Einheit ONU 1 erläutert werden. In der Zeile 1 der Figur 3 ist ein von der Zentrale OLT an eine der abgesetzten Einheiten ONU ausgesendeter Signalblock dargestellt, der den Signalblöcken der Figur 2 entspricht. In der Zeile 2 ist dieser Signalblock beim Empfang in der unmittelbar der Zentrale benachbarten ersten abgesetzten Einheit ONU1 dargestellt, wegen der vernachlässigbaren Faserlaufzeit ist die zeitliche Lage beider Signalblöcke praktisch gleich. In der Zeile 3 ist ein Signalblock in der zeitlichen Lage dargestellt, in der er von der ersten abgesetzten Einheit ONU1 an die Zentrale gesendet wird. Der Rahmen und damit der Anfang dieser Signalblöcke ist um eine Zeit entsprechend einem Rahmenoffset RO zwischen dem Sendezyklus und dem Empfangszyklus der abgesetzten Einheiten nach vorn verschoben. Dieser Rahmenoffset RO gilt für alle abgesetzten Einheiten des erfindungsgemäßen TDM/TDMA-Systems und bestimmt sich aus der Länge des Erwartungsfensters EWF der Zentrale multipliziert mit der um Eins verringerten Anzahl der Entfernungsbereiche.

Im Entfernungsbereich 1 ist das Verzögerungsglied T dieser abgesetzten Einheit auf eine zweite Grundverzögerung GDB1 eingestellt, die die Summe aus der ersten Grundverzögerung GD1 und dem Rahmenoffset RO entsprechend der Figur 3 darstellt. Damit entspricht die Lage des Sendezeitpunktes der ersten abgesetzten Einheit ONU1 entsprechend Zeile 3 dem Empfangszeitpunkt in der Zentrale entsprechend Zeile 4 und der Soll-Lage entsprechend Zeile 5 wieder denen von Figur 2.

Die dritte abgesetzte Einheit ONU3 befindet sich in einer Entfernung von etwa 11 km Faserlänge von der Zentrale OLT, so daß die Signalblöcke von Zeile 6 zeitverschoben eintreffen. Für die Aussendung der Signalblöcke entsprechend Zeile 7 durch die dritte abgesetzte Einheit ONU3 gilt wiederum die Zeitverschiebung entsprechend dem Rahmenoffset RO und der zweiten Grundverzögerung GDB1. Nach einer Laufzeit von etwa 11o Mikrosekunden für eine Faserlänge von 11 km lange Strecke wird der Signalblock in der Zentrale in der Lage von Zeile 8 empfangen, die direkt der Soll-Lage nach Zeile 9 entspricht. Damit ergibt sich, daß für die dritte abgesetzte Einheit ONU3 keine zusätzliche Laufzeitkorrektur erforderlich ist, während die erste abgesetzte Einheit ONU1 eine zusätzliche Laufzeitkorrektur LZK benötigt, damit bei der Nutzsignalübertragung die Testpaket-Signale im Erwartungsfenster EWF der Zentrale OLT eintreffen. Von dieser gesteuert wird das Verzögerungsglied T der ersten abgesetzten Einheit ONU1 entsprechend der ermittelten Laufzeitkorrektur umgeschaltet.

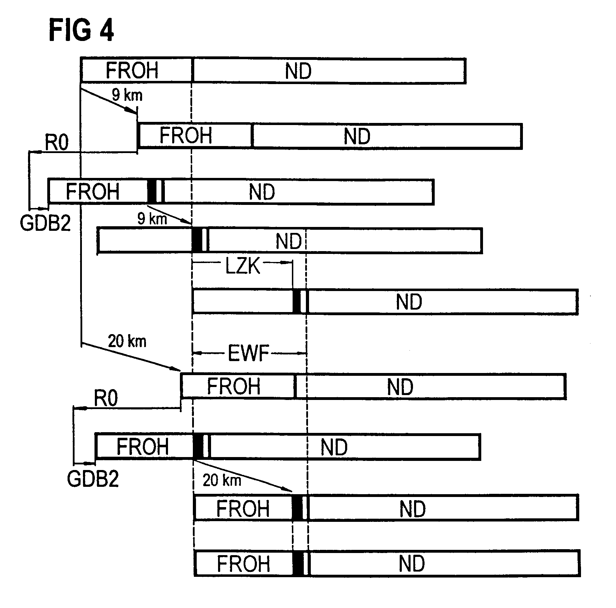

In der Figur 4 ist in der Zeile 1 wiederum ein Signalblock dargestellt, der von der Zentrale OLT zu der in 9 km Faserlänge von der Zentrale OLT angeordneten vierten abgesetzten Einheit ONU4 gesendet wird und entsprechend Zeile 2 nach entsprechender Laufzeit eintrifft. Auch für die abgesetzten Einheiten im Entfernungsbereich 2 gilt, daß der Sendezyklus an die Zentrale und damit der Rahmen für die Signalblöcke um ein Rahmenoffset RO gegenüber dem Rahmen der von der Zentrale empfangenen Signalblöcke früher beginnt. Die Grundverzögerung GDB2 für den Entfernungsbereich 2 wird so gewählt, daß mit dem gegebenen Rahmenoffset an der unteren Grenze des Entfernungsbereichs das Testpaket gerade noch auf den Beginn des Erwartungsfensters fällt. Dadurch ergibt sich ein Vorlauf in der Aussendung der Signalblöcke von den im Entfernungsbereich 2 angeordneten abgesetzten Einheiten ONU4, ONU5. Die von der jeweiligen abgesetzten Einheit wahrend des Empfangs der Signalblöcke der Signale an die Zentrale ausgesendeten Signalblöcke können noch nicht die Antwort auf Steuerbefehle der Signalblöcke enthalten, diese Antwort erfolgt für alle abgesetzten Einheiten des erfindungsgemäßen TDM/TDMA-System frühestens in dem auf den jeweiligen Empfangszyklus folgenden Sendezyklus bzw. Signalblock.

In der Zeile 4 ist der von der vierten abgesetzten Einheit ONU4 ausgesendete Signalblock beim Empfang in der Zentrale, also nach einer Laufzeit entsprechend 9 km Faserlänge dargestellt. Es ist erkennbar, daß die Testpaketsignale dieses Signalblocks gerade noch im Erwartungsfenster EWF der Zentrale OLT auftreten, die Zeile 4 und auch die Zeile 5 der Figur 4 entspricht also der der Zeilen 4 und 5 der Figur 3, so daß auch in der vierten abgesetzten Einheit ONU4 eine Laufzeitkorrektur LZK wie in der ersten abgesetzten Einheit ONU1 einzufügen ist. Es zeigt sich dabei auch, daß die Überlappung der Entfernungsbereiche völlig unkritisch ist, so daß für die Einteilung in Entfernungsbereiche vor dem Einmeßvorgang keine aufwendigen Messungen erforderlich sind.

In der Zeile 6 ist die Lage eines in der fünften abgesetzten Einheit ONU5 empfangenen Signalblockes dargestellt. Diese abgesetzte Einheit befindet sich in der maximalen Entfernung von etwa 20 km Faserlänge von der Zentrale, so daß der Signalblock entsprechend verzögert empfangen wird. Auch in der fünften abgesetzten Einheit ONU5 ist bei der Montage eine Zeitverschiebung entsprechend einem Rahmenoffset RO in der Länge eines Erwartungsfensters multipliziert mit der um Eins verringerten Anzahl der Entfernungsbereiche voreingestellt. Entsprechend der Zuordnung zum Entfernungsbereich 2 ist wie für die vierte abgesetzte Einheit ONU4 die Grundverzögerung GDB2 für den zweiten Entfernungsbereich eingestellt, so daß bereits vor Beginn des Empfangs der von der Zentrale ausgesendeten Signalblöcke die fünfte abgesetzte Einheit ONU5 mit dem Aussenden ihrer Signalblöcke an die Zentrale beginnt. Nach einer Laufzeit entsprechend einer Faserlänge von 20 km werden diese Signalblöcke von der Zentrale entsprechend Zeile 8 empfangen, der Vergleich mit Zeile 9 zeigt, daß es sich dabei um einen Empfang in Soll-Lage handelt. Das erfindungsgemäße TDM/TDMA-System enthält nur abgesetzte Einheiten ONU in zwei Entfernungsbereichen, es ist aber leicht erkennbar, daß auch eine Einteilung in drei Entfernungsbereiche mit entsprechend gestuftem Rahmenoffset RO zur weiteren Vergrößerung des Reichweitenbereiches leicht möglich ist.

## Patentansprüche

1. Optisches TDM/TDMA-System mit einem, sich von einer Zentrale zu in unterschiedlicher Entfernung angeordneten teilnehmernahen abgesetzten Einheiten aufspaltenden optischen Netzwerk, mit einer Übertragung von Zeitmultiplex (TDM-)-Signalen von der Zentrale zu den abgesetzten Einheiten in einem festgelegten Sendezyklus und mit einer Signalübertragung im Zeitmultiplex-Vielfachzugriff (TDMA) in Gegenrichtung, wobei nach dem Empfang der Zeitmultiplex-Signale in der jeweiligen abgesetzten Einheit deren Aussendung von Zeitmultiplex-Vielfachsignalen in Abhängigkeit von der Entfernung zur Zentrale so erfolgt, daß in der Zentrale die Signale der einzelnen abgesetzten Einheiten voneinander ungestört jeweils in einem vorher festgelegtem Erwartungsfenster empfangen werden können,
**dadurch gekennzeichnet**,
daß die abgesetzten Einheiten (ONU) hinsichtlich der entfernungsbedingten Laufzeit der von ihnen zur Zentrale (OLT) gesendeten Signale in wenigstens zwei Entfernungsbereiche aufgeteilt sind,
daß alle abgesetzten Einheiten (ONU)des von der Zentrale am weitesten entfernten Entfernungsbereichs auf eine gleiche erste Grundverzögerung (GDB1) eingestellt sind und die abgesetzten Einheiten (ONU) jeweils eines der anderen Entfernungsbereiche auf vergleichsweise längere ,für alle diese abgesetzten Einheiten gleich große Grundverzögerungen (GDB2) eingestellt sind,
daß der Sendezyklus der abgesetzten Einheiten (ONU) jeweils wenigstens um ein Rahmenoffset (RO) früher beginnt, als der Empfangszyklus der betreffenden abgesetzten Einheiten (ONU) für die Signale der Zentrale (OLT), wobei sich der Rahmenoffset (RO) aus der Länge des Erwartungsfensters (EWF) der Zentrale (OLT) multipliziert mit der um Eins verringerten Anzahl der Entfernungsbereiche ergibt und daß die Antwort der abgesetzten Einheiten auf Befehle der Zentrale frühestens in dem sich an den Empfangszyklus anschließenden Sendezyklus erfolgt.

2. Optisches TDM/TDMA-System nach Anspruch 1,
**dadurch gekennzeichnet**,
daß bei der Aufteilung der abgesetzten Einheiten (ONU) in zwei Entfernungsbereiche die Grundverzögerung (GDB2) des zweiten Entfernungsbereichs so gewählt wird, daß mit dem gegebenen Rahmenoffset das Testpaket an der unteren Grenze des Entfernungsbereichs gerade noch auf den Beginn des Erwartungsfensters fällt.

3. Optisches TDM/TDMA-System nach Anspruch 2,
**dadurch gekennzeichnet**,
daß im ersten Entfernungsbereich die abgesetzten Einheiten(ONU) mit einer Entfernung von 0 bis etwa 11 km Faserlänge und im zweiten Entfernungsbereich die abgesetzten Einheiten mit einer Entfernung von etwa 9 bis etwa 20 km Faserlänge jeweils von der Zentrale (OLT) enthalten sind.
